(19) Europäisches Patentamt
European Patent Office
Office européen des brevets

(11) EP 1 523 533 B1

(12) **EUROPEAN PATENT SPECIFICATION**

(45) Date of publication and mention of the grant of the patent:
**15.08.2007 Bulletin 2007/33**

(21) Application number: **03761697.6**

(22) Date of filing: **30.06.2003**

(51) Int Cl.:
***C09K 19/34*** *(2006.01)*

(86) International application number:
**PCT/GB2003/002777**

(87) International publication number:
**WO 2004/003108 (08.01.2004 Gazette 2004/02)**

(54) **LUMINESCENT COMPOSITIONS**

LUMINISZIERENDE ZUSAMMENSETZUNGEN

COMPOSITIONS LUMINESCENTES

(84) Designated Contracting States:
**AT BE BG CH CY CZ DE DK EE ES FI FR GB GR HU IE IT LI LU MC NL PT RO SE SI SK TR**

(30) Priority: **01.07.2002 GB 0215153**

(43) Date of publication of application:
**20.04.2005 Bulletin 2005/16**

(73) Proprietor: **The University of Hull**
**North Humberside, HU6 7RX (GB)**

(72) Inventors:
- **KELLY, Stephen Malcolm**
  **Beverley**
  **East Yorkshire HU17 8XA (GB)**
- **O'NEILL, Mary**
  **Hull HU17 8XA (GB)**

(74) Representative: **Atkinson, Peter Birch et al**
**MARKS & CLERK,**
**Sussex House,**
**83-85 Mosley Street**
**Manchester M2 3LG (GB)**

(56) References cited:
**WO-A-97/07654**
**US-A- 5 807 974**
**US-A- 5 876 864**
**US-A1- 2003 119 936**
**US-B1- 6 337 150**

- **VOIGT M ET AL: "CIRCULARLY POLARIZED EMISSION FROM A NARROW BANDWIDTH DYE DOPED INTO A CHIRAL NEMATIC LIQUID CRYSTAL" LIQUID CRYSTALS, TAYLOR AND FRANCIS LTD, LONDON, GB, vol. 29, no. 5, May 2002 (2002-05), pages 653-656, XP001102371 ISSN: 0267-8292**
- **MORITA M ET AL: "Luminescence and circularly polarized luminescence of excited-state chiral structures in one-dimensional PIC-J dye aggregates" MICROELECTRONIC ENGINEERING, ELSEVIER PUBLISHERS BV., AMSTERDAM, NL, vol. 51-52, May 2000 (2000-05), pages 605-611, XP004199427 ISSN: 0167-9317**
- **DATABASE INSPEC [Online] INSTITUTE OF ELECTRICAL ENGINEERS, STEVENAGE, GB; BIN LIU ET AL: "Application of alternating fluorene and thiophene copolymers in polymer light-emitting diodes" Database accession no. 7424597 XP002258305 & SYNTHETIC METALS, 10 JULY 2002, ELSEVIER, SWITZERLAND, vol. 129, no. 2, pages 129-134, ISSN: 0379-6779**
- **DATABASE INSPEC [Online] INSTITUTE OF ELECTRICAL ENGINEERS, STEVENAGE, GB; CHARAS A ET AL: "Synthesis and optical properties of poly(fluorene)-based alternating copolymers" Database accession no. 6956735 XP002258307 & EUROPEAN MATERIALS RESEARCH SOCIETY 2000 SPRING MEETING, SYMPOSIUM I: ORGANIC ELECTRONICS;FROM LIGHT EMITTING DIODES TO INTEGRATED CIRCUITS, STRASBOURG, FRANCE, 30 MAY-2 JUNE 2000, vol. 122, no. 1, pages 23-25, Synthetic Metals, 1 May 2001, Elsevier, Switzerland ISSN: 0379-6779**
- **CHARAS A ET AL: "Synthesis and luminescence properties of three novel polyfluorene copolymers" POLYMER, ELSEVIER SCIENCE PUBLISHERS B.V, GB, vol. 44, no. 6, March 2003 (2003-03), pages 1843-1850, XP004410272 ISSN: 0032-3861**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 523 533 B1

## Description

The present invention relates to luminescent organic compositions which are capable of emitting circularly polarised light and also to light emitting devices incorporating such compositions. Examples of such devices contemplated by the invention include Organic Light Emitting Diodes (OLEDs) e.g. as light sources for "backlighting" Liquid Crystal Displays (LCDs) or as display devices in their own right.

Modem consumer electronics require cheap, light contrast displays with good power efficiency and low drive voltages. This is increasingly important with the development of mobile communications.

Currently flat panel displays are provided predominantly by LCDs, e.g. Twisted Nematic LCDs (TN-LCDs) with active matrix addressing and Super-Twisted Nematic LCDs (STN-LCDs) with multiplex addressing. There is however a disadvantage with LCDs in that they are of low intrinsic brightness and intense back lighting is required which in turn is a heavy drain on power. This low intrinsic brightness is due to high losses of light caused by the absorbing polarisers and filters which result in external transmission efficiencies of around 1% [1]. These losses can be reduced by providing a back light source which itself emits polarised light of a high polarisation ratio, in excess of 100:1 (although lower values (in excess of 10:1) can be employed if a "clean-up" polariser is also used). The use of such a light source avoids the need for one of the polarisers in the LED thus improving brightness. The light source may be a electroluminescent (EL) light source and the combination of organic EL and LCD technologies offers the possibility of low cost, bright portable displays with the combined benefits of simplified manufacturing and enhanced power efficiency. Thus, the development of OLEDs [2-4] offers the prospect of a light source with polorised electroluminescence for LCDs with a lower power consumption and high brightness. [3] OLEDs also represent the main competitor to Liquid Crystal Displays (LCDs) in the flat panel displays market as well as being a potential source of polarised emission for LCDs.

OLEDs are characterised by low operating voltages and power consumption, wide viewing angles and high brightness and contrast ratios. Thus, they are compatible with portable applications. High-information-content OLEDs using organic materials can be addressed using direct addressing, multiplex addressing or active matrix addressing.

OLEDs are currently fabricated using electroluminescent low-molar-mass materials or aromatic conjugated electroluminescent polymers with a high glass transition temperature ($T_g$). Both of these classes of organic materials require a high $T_g$ value in order to avoid crystallisation, which can degrade device performance severely. Indeed, life-time has been the major obstacle to commercialisation of this otherwise attractive technology. However, commercial OLEDs using low-molecular weight materials and polymer are starting to appear on the flat-panel displays market in significant volumes. Typically EL polarisation ratios of 30 to 40 for linearly (plane) polarised light are desired, but with the use of a clean up polariser EL ratios of 10 or more are adequate. However, circularly polarised light can also be converted into a source of linearly polarised light by the very efficient transformation of the emitted circularly polarised light into plane polarised light by the use of an inexpensive quarter-wave ($\lambda/4$) plate with very little loss.

Plane polarised EL can be achieved from uniaxially aligned chromophores with best results obtained from polymers to date. [3,4] An EL polarisation ratio of 12:1 with 200 cd $m^{-2}$ was found from *para*-phenylene vinylene rubbed at high temperatures when partially-formed from its soluble polymer precursor. [5] A better ratio of 15:1 but with lower brightness was reported for liquid crystalline polyfluorene films oriented using rubbed polyimide. [6] However, in addition to problems associated with mechanical rubbing, these high molecular weight polymers can possess disadvantages such as high viscosity, leading to long annealing times at high temperatures. The macroscopic alignment of the chromophore for polarised EL has been achieved by a variety of methods including mechanical stretching [7,8], rubbing [9] and Langmuir-Blodgett (LB) deposition [10]. Very large polarisation ratios for photoluminescence have been obtained from stretch-oriented films of MEH-PPV, i.e. poly(2-methoxy-5-[2'-ethyl-hexyloxy]-*para*-phenylene vinylene. [11] However, implementation in active EL configurations proves problematic for films of thickness $\leq 1\ \mu m$ due to degradation of the structural integrity of the film at the high draw ratios required. In contrast, LB deposition creates macroscopically oriented thin films of a few nm thickness. Unfortunately, the LB deposition technique is not compatible with large-scale production of commercial devices. Crystallisation of LB films over time is also a major problem.

Because of these factors, rubbed polyimide [5,6,12] has remained until now the most attractive process for aligning luminescent chromophores, especially in the liquid crystalline state, for potential commercial applications. Even so, the rubbing process does have several potential drawbacks as it can cause mechanical damage and generate electrostatic charge. Hence leakage currents result, which can significantly reduce device lifetimes.

The conversion of macroscopically oriented reactive mesogens (liquid crystals) to an intractable network provides an alternative route to polarised EL. This technique involves the polymerisation and crosslinking of reactive liquid crystal monomers via photo-polymerisable and/or thermally polymerisable end-groups of the molecule. Low temperature processing is possible and multilayer devices can be constructed with carrier-transporting layers deposited on top of the insoluble crosslinked network. Sub-pixellation can also be achieved by selective photopatterning. Polarised EL with a dichroic ratio of 2 was achieved only by doping a liquid crystal network with a photoactive perylene dye. [13] Other authors quote polarised absorbance and PL. [14,15] EL was not reported. We have recently demonstrated for the first time that efficient emission of linearly polarised light is possible using this approach. [16-18] Electroluminescence with

a polarisation ratio of 11:1 from a uniformly aligned nematic network was achieved. Diene photo-active end-groups were used, which polymerise by a selective cyclisation reaction. Surface alignment was achieved using a doped polymer photoalignment layer, oriented by exposure to a polarised IJV light. Threshold voltages between 2 V and 8 V were found and a maximum brightness of 400 cd $m^{-2}$ was obtained. This combination of photocrosslinking and non-contact alignment technology shows that polarised, patterned, multilayer organic electroluminescent displays can be made using standard photolithography techniques at room temperature.

The use of circularly polarised light as a light source is much less advanced, although potentially of equal or greater value. Circularly polarised light has been generated by photoluminescence and electroluminescence using three main methods [3] involving macroscopically aligned chiral nematic liquid crystals;

a) a guest-host system involving a photoluminescent guest molecule in a chiral nematic host [19];

b) mainchain conjugated polymers with optically active (chiral) pendent chains [20,21]; and

c) chiral nematic glasses [22-24].

Voigt M. et al. ("Circularly polarized emission from a narrow bandwidth dye doped into a chiral nematic liquid crystal", LIQUID CRYSTALS, TAYLOR AND FRANCIS LTD, LONDON, GB, vol. 29, no. 5, May 2002, pages 653-656, ISSN: 0267-8292) report on circularly polarized light emitted from a chiral nematic liquid crystal doped with a luminescent organolanthanide dye. The organolanthanide emission displays an extremely narrow spectral bandwidth.

WO 97/07654 A1 (PHILIPS ELECTRONICS N.V. [NL]; PHILIPS NORDEN AB[SE]), 27 February 1997, discloses an electroluminescent device comprising an anisotropic active layer of an oriented electroluminescent organic compound, which layer is situated between two electrode layers, at least one electrode layer being transparent to the light to be emitted, and, in operation, said device emitting polarized light, characterized in that the electroluminescent compound also comprises an oriented liquid-crystalline unit or is mixed with an oriented liquid- crystalline compound. The electrode layer comprises an electroconductive polymer layer, which is rubbed in one direction. Said polymer layer comprises poly-3,4-ethylene dioxythiophene.

Bin Liu et al. ("Application of alternating fluorene and thiophene copolymers in polymer light-emitting diodes", SYNTHETIC METALS, 10 JULY 2002, ELSEVIER, SWITZERLAND, vol. 129, no. 2, pages 129 - 134) report on four polyfluorene copolymers comprised of fluorene and thiophene or bithiophene moieties. Relatively high photoluminescence quantum yields (23-40%), good optical and electrochemical properties have been demonstrated for this series of polymers.

The chiral nematic phase (N*) is the helical equivalent, induced by the presence of at least one optically active material, of the usual nematic state. This results in a macroscopic helical structure in which the director rotates through 360° over the pitch length of the chiral nematic phase. The optical properties of the chiral nematic phase originate from this twisted structure, e.g., high optical rotation of plane polarised light under certain conditions, circular dichroism and the selective (Bragg) reflection of circularly polarised light in a narrow band of wavelengths related to the pitch of the helix.

An unusual feature of a chiral nematic helix is that one hand of circularly polarised light is reflected and one hand is transmitted. The central wavelength of selective reflection is given by

$$\lambda_s = p.n \qquad (1)$$

where p is the pitch of the chiral nematic helix and n is the average refractive index ($n_o$ + $n_e$/2). The pitch of a chiral nematic phase is temperature dependent since both refractive indices of a liquid crystal vary with temperature. The bandwidth of selective reflection is given by

$$\Delta\lambda = \lambda_s n / \Delta n \qquad (2)$$

where $\Delta$n is the birefringence ($n_o$- $n_e$) of the chiral nematic liquid crystalline phase.

The highest degree of circular polarisation of emitted light obtained from a luminescent chiral nematic system has been achieved by matching the wavelength of emission to the wavelength of selective reflection of the chiral nematic helix in the so-called resonance region. The degree of circular polarisation can be defined by the dissymmetry factor $g_e$

$$g_e = 2(I_L - I_R)/(I_L + I_R) \quad (3)$$

where $I_R$ and $I_L$ are the intensity of right-handed and left-handed, respectively, of the emitted circularly polarised light, or by the ratio of $I_R$ to $I_L$ (or the inverse). These parameters are clearly related and should be as high as possible for practical applications. The magnitude of $g_e$ varies from 0 for unpolarised light to $\pm 2$ for completely circularly polarised light. Values of -1.5 to +0.8 were achieved in the resonance region using chiral nematic liquid crystals stabilised in the glassy state.

However, an inversion in sign in the resonance region was observed inexplicably. The $g_e$ factor also changed significantly with wavelength and the wavelength integrated value of $g_e$ is low. Furthermore, such high values were only achieved using very thick cells, e.g., 35 $\mu$m. Unfortunately chiral nematic conjugated polymers exhibit very low $g_e$ values, e.g., $5 \times 10^{-3}$.

It is an object of the present invention to obviate or mitigate at least some of the abovementioned disadvantages.

According to a first aspect of the present invention there is provided a composition capable of emitting circularly polarised light comprising a medium including a chiral, helical liquid crystalline phase with a substantially fixed, temperature independent helical pitch, said liquid crystalline phase being comprised of calamatic liquid crystal molecules having a luminescent moiety and the composition being such that excitation of the luminescent moiety causes the medium to emit light in the bandwidth of selective reflection of the liquid crystalline phase.

According to a second aspect of the present invention there is provided a light emitting device comprised of a cell having a pair of opposed sides and containing a composition as defined for the first aspect of the invention, at least one of said sides being transparent to the polarised light emitted by said composition on excitation of the luminescent moiety.

Light emitting devices in accordance with the second aspect of the invention may be produced by providing a cell having a pair of opposed walls at least one of which is provided on its interior surface with an alignment layer and filling the cell with a formulation (which is a precursor to the composition of the invention) which incorporates calamatic liquid crystal molecules having a luminescent moiety and which is capable of being assembled by said alignment layer (s) to a chiral, helical liquid crystalline phase, assembling said formulation into said liquid crystalline phase, and immobilising said phase so as to provide the latter with a substantially fixed, temperature independent helical pitch. As described more fully below, the immobilisation (to produce the composition of the invention) may be effected by converting the precursor formulation into a glass by quenching that composition to below its glass transition temperature ($T_g$). Alternatively the calamatic liquid crystal molecules may incorporate polymerisable moieties (e.g. olefinic double bonds) such that the composition may be polymerised to form a network in which the helical liquid crystalline phase has a fixed, temperature independent pitch.

According to a third aspect of the present invention there is provided a medium including a chiral, helical liquid crystalline phase in the form of a glass, said liquid crystalline phase being comprised of calamatic liquid crystal molecules having a luminescent moiety and the composition being such that excitation of the luminescent moiety causes the medium to emit light in the bandwidth of selective reflection of the liquid crystalline phase.

According to a fourth aspect of the present invention there is provided a medium including a chiral, helical liquid crystalline phase in the form of a polymerised network, said liquid crystalline phase being comprised of calamatic liquid crystal molecules having a luminescent moiety and the composition being such that excitation of the luminescent moiety causes the medium to emit light in the bandwidth of selective reflection of the liquid crystalline phase.

The compositions of the invention (which as indicated may be glasses or polymer networks) are comprised of calamatic liquid crystal molecules which incorporate a luminescent moiety and which are 'assembled' in a chiral, helical liquid crystalline phase. The preferred range for the "length" of the helical pitch of the composition is 0.2 $\mu$m to 0.5 $\mu$m. In use the luminescent moiety is activated (in ways described more fully below) to generate light which is within, or is converted to be within, the bandwidth of selective reflection of the helical liquid crystalline phase. As a result, and due to the abovedescribed properties of a chiral, helical liquid crystalline phase, circularly polarised light is emitted.

By ensuring that the liquid crystalline phase has a substantially constant, temperature independent helical pitch, the 'stopband' (i.e. the bandwidth of selective reflection) is temperature independent so that the luminescent properties are likewise independent of temperature.

The use of the calamatic liquid crystal molecules is an important feature of the invention since it is these molecules which allow light emitting devices which are much thinner than those achieved using the "disk-like" molecules in the chiral nematic glasses, [22-24]. Calamatic liquid crystal molecules as employed in this invention exhibit high refractive indices and a large birefringence. This allows the use of thin cells, which is especially advantageous for electroluminescence where the switch-on and operating voltages increase with cell thickness. Furthermore, calamatic liquid crystal molecules as employed in this invention posses a relatively low value for the flow viscosity, which allows

them to be oriented efficiently with a high order parameter on alignment layers, especially photoalignment layers. This contributes to the high values of the polarisation ratios of circularly polarised light obtained using cells incorporating these calamitic liquid crystals. A further advantage of the calamatic liquid crystal molecules as employed in this invention is the ability to so modify their chemical structure to obtain high charge mobility, especially of holes, through them. This is advantageous for the construction of efficient OLEDs containing them as described below.

The compositions exhibit an intrinsic high value of birefringence ($\Delta n$) which results in high reflectivity in the light emitting devices and a broad bandwidth of selective reflection (see equation 2 above). Circularly polarised electroluminescence with high $I_L$ to $I_R$ ratios (>15:1) can be predicted from devices with a thickness, $d >> \lambda_s/n$, so a high value of the average refraction index, n, enables thin devices to be made for light of a given wavelength, e.g. in the visible spectrum. The rod-like or lathe-like nature of calamatic liquid crystal molecules as employed in this invention with their high length-to-breadth ratio and highly conjugated and rigid aromatic molecular cores automatically gives rise to high values for the refractive indices and the birefringence. The value of d (i.e. the width of the "gap" in the cell) may for example be in the range of 1 to 10 microns. Thinner devices could be used to provide lower, but acceptable, $I_L$:$I_R$ ratios.

The chiral, liquid crystalline phase of the composition of the invention is preferably a chiral nematic phase but may also be a chiral smectic C phase. The chirality of the phase may be by virtue of the calamitic liquid crystalline molecules having at least one chiral centre. Alternatively these molecules may be achiral and a chiral dopant is provided in the liquid crystalline phase. Examples of chiral dopants are disclosed in Liquid Crystals, **11**, 761, 1992 and references therein.

For all embodiments of the composition in accordance with the invention, the pitch of the helical liquid crystalline phase can be "engineered" such that the bandwidth of selective reflection has the value required for the particular application of the composition. It is also possible to adjust the pitch such that the emission region exhibits rotary power or mauguin wave-guiding upon excitation of laser. The pitch can also be modulated by mixing the achiral and chiral versions of the luminescent liquid crystal molecules as employed in this invention so that the luminescence characteristics remain the same, so as not to affect energy transfer to a dye.

The luminescent moiety in the calamatic liquid crystal molecules may be photoluminescent or electroluminescent and may thus be excited accordingly to emit light which is, or is converted in the medium containing the helical liquid crystalline phase to be, within the bandwidth of selective reflection.

Compositions in accordance with the invention may take a number of forms.

In one embodiment of the composition, the luminescent moiety (be it photoluminescent to electroluminescent) is capable on excitation (by light or application of a potential difference as appropriate) of emitting light in the bandwidth of selective reflection of the liquid crystalline phase.

In a further embodiment of the invention, the luminescent moiety (be it photoluminescent to electroluminescent) does not emit in the bandwidth of selective reflection but the composition contains a dye capable of absorbing the emission of the luminescent moiety and re-emitting light having a wavelength in the bandwidth of selective reflection. This approach enables the fabrication of full-colour, high information-content OLEDs by pixellation of the three primary colours using luminescent dyes. Alternatively the dye can be excited by nonradiative Forster-Dexter energy transfer from a blue-emitting chiral liquid crystalline polymer network to red-emitting and green-emitting dyes. In each case, the pitch of the helix is preferably adjusted for maximum value of the circular extinction ratio for each colour. Examples of dyes that may be used for converting blue light to red or green light are shown in the following Table 1.

Table 1

| Molecular Structure | Acronym | colour |
|---|---|---|
| 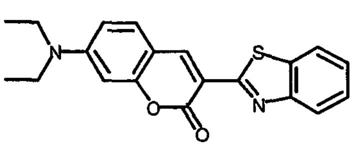 | Coumarin 6 | red |
| 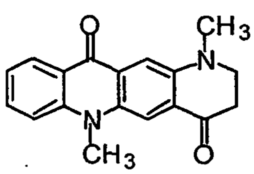 | DMQA | green |

(continued)

| Molecular Structure | Acronym | colour |
|---|---|---|
| 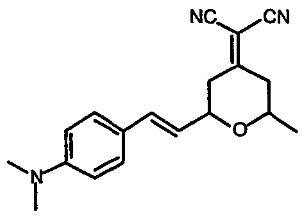 | DCM-1 | red |
| 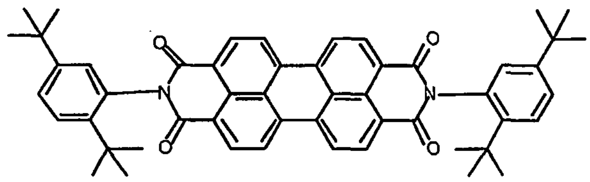 | TBPD | red |
| 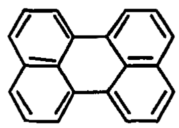 | perylene | orange |

In the case where the luminescent moiety in the calamatic liquid crystal is photoluminescent it may be activated either by an external light source or by light from a luminescent dye provided in the medium. For the former case, the compositions of the invention are ideal for conversion of an unpolarised light source into circularly polarised light of different wavelength. Electrically pumped laser action is also possible because of the high feedback. Excitation can also be provided by current injection to provide electroluminescence from the host, which is transferred to the guest dye, which in turn emits light at a longer wavelength.

It will be appreciated from the foregoing description that compositions in accordance with the invention may readily be formulated to emit light of a predetermined wavelength. More particularly, the emission spectrum of the compositions can be easily tuned to the band width of selective reflection from the chiral helix by chemical modification and/or by blending with non-optically active analogues.

The chiral, helical liquid crystalline phase with a fixed, temperature independent helical pitch, is most preferably a Nematic phase but could also be a Smectic C phase. It is possible substantially to fix the helical pitch of the liquid crystalline phase (so that the pitch is substantially temperature independent) in a number of ways. For example, the liquid crystalline phase may be in the form of a glass in which the calamatic liquid crystals are effectively immobilised. For this purpose it is preferred that the composition of the invention has a glass transition temperature (Tg) of more than 50˚C. Alternatively, the calamatic liquid crystal molecules may incorporate groups (e.g. olefinically unsaturated groups) that may be polymerised to form a network which effectively immobilises the molecules.

The calamatic liquid crystal molecules employed in the composition of the invention will generally incorporate a luminescent (photoluminescent or electroluminescent) moiety which will provide the "core" of the molecule and to which are attached two aliphatic spacer groups. The core may be a rigid, highly conjugated aromatic system. This luminescent core will usually be comprised of a number, preferably 4 to 6, conjugated aromatic rings and may comprise a fluorene "centre" each benzene ring of which is conjugated to a system of at least one (and preferably two) further aromatic ring(s), to which systems are bonded the spacer groups. Each such system may comprise a thiophene ring bonded firstly to an aromatic ring of the fluorine residue and, secondly, to a further benzene nucleus to which is bonded the spacer group.

Such molecules generally absorb in visible or near-UV part of the electromagnetic spectrum and emit in the visible or near infrared part of the spectrum.

Examples of suitable liquid crystal molecules are of the following formula:

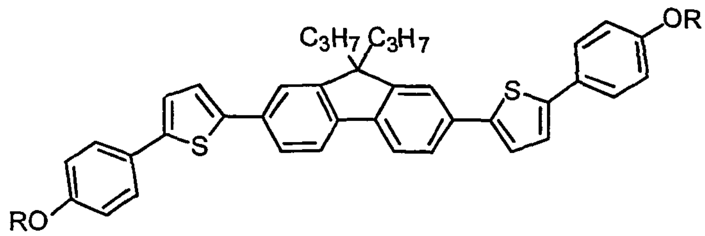

in the above formula, the R groups (which may be the same or different) represent spacer groups. Groups other than the propyl ($C_3H_7$-) may also be employed, e.g. alkyl groups of one, two or four carbon atoms.

The aliphatic spacer groups preferably each contain four to sixteen carbon atoms, more preferably a chain of four to twelve carbon atoms. Preferably at least one, and preferably both, of the spacer groups has at least one branch (preferably a methyl group) which provides a chiral centre. Preferably the two spacer groups are identical with each other.

The position of the optically active centre and the nature of the branch are chosen in order to induce a chiral helical (preferably nematic) pitch in the region of the emission spectrum for optimum efficiency of generation of circularly polarised light. The closer the position of the branching group in the aliphatic spacer group is to the molecular core the smaller is the pitch. Small branching groups, such as methyl, cyano or halogen, especially fluorine and chlorine, are preferred, since they induce the desired magnitude of the pitch, contribute to the formation of liquid crystalline glasses and do not excessively depress the liquid crystalline character of the compounds incorporating them.

A polymerisable group may be present at the end of the spacer group. This polymerisable group may be an acrylate, methacrylate, conjugated or non-conjugated diene, a vinyl ether or an oxetane. A photopolymerisable group is preferred. It is also particularly preferred that the end groups polymerise to incorporate a cyclic structure in the polymer backbone. A non-conjugated diene, such a 1,4-pentadien-3-yl, 1,5-hexadien-3-yl or 1,6-heptadien-4-yl group, is preferred at the "end" of a spacer group. These materials can be used as thin photoluminescent or electroluminescent films as chiral nematic glasses or as crosslinked polymer networks.

The following Table 2 gives examples of calamatic liquid crystal molecules that may be employed in the invention.

Table 2. Transition temperatures (˚C) for the fluorenes (1-3), where Cr-N* and Cr-I = the melting point, N*-I = the clearing point from the chiral nematic (N*) phase and $t_g$ is the glass transition temperature.

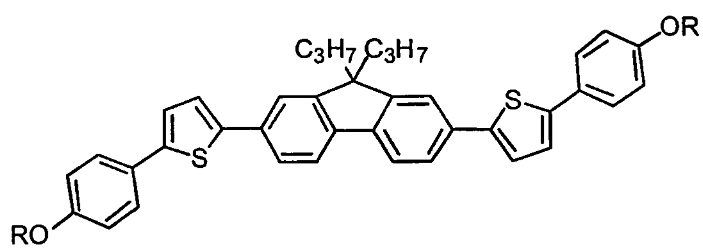

| | RO | OR | $t_g$ | Cr | N* |
|---|---|---|---|---|---|
| 1 | 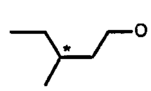 | 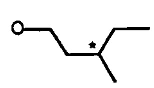 | (*S*) • 45 | • 194 | (• 173) |
| 2 | 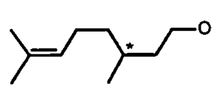 | 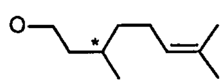 | (*R*) • 29 | • 123 | (• 122) |

(continued)

| | RO | OR | $t_g$ | Cr | N* |
|---|---|---|---|---|---|
| 3 | 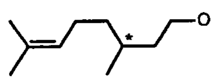 | 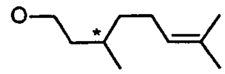 | (*S*) • 23 | • 123 | (• 122) |
| ( ) Represents a monotropic transition temperature | | | | | |

Such kinds of calamatic liquid crystal molecules are especially useful for forming chiral nematic glasses.

An example of a liquid crystal molecule that may be used in the formation of polymerised network is of the above general formula (shown in Table 2) in which the R groups are of the formula:

**-(CH2)x-C (O) O- R'**

where x is 4 to 12 (preferably 4-6, e.g. 5) and R' is a 1,4-pentadien-3-yl, 1,5-hexadien-3-yl or 1,6-heptadien-4-yl group.

Devices in accordance with the second aspect of the invention may, as indicated above, be prepared by filling cells having a pair of opposed substrates at least one of which is provided on its interior surface with an alignment layer with a composition that is capable of being assembled by the alignment layer(s) into a chital helical liquid crystalline phase, and then treating the composition to fix the pitch length of the helix at a constant value.

The or each alignment layer is preferably a photoalignment layer, generated by the action of actinic light, preferably polarised ultra violet light, on a photoreactive polymer, especially such as formed by a 2+2 cyclisation reaction, as described in Chem Mater, **13,** 694, 2001 and J. Phys D. Appl. Phys., **33** R67, 2000. Such layers facilitate polarised emission due to the weak wall effects on the adjacent liquid crystal medium of the photoalignment layers.

The compositions of the invention are ideal for the conversion of unpolarised light into circularly polarised light of different wavelength. If desired, the circularly polarised light can be converted to plane polarised light by a $\lambda/4$ wave plate. Electrically pumped laser action is also possible because of the high feedback.

Compositions in accordance with the invention are also highly efficient hole-transport materials which aids charge injection for efficient electroluminescence.

The compositions of the invention may be used for generating an efficient source of circularly polarised light for a number of applications, e.g. especially bright OLEDs for back lighting LCDs, lasers; notch filters etc.

The device may, for example, be photoluminescent and may be provided between a light source and a LCD as a backlight for the latter (since the device efficiently converts unpolarised light into highly circularly polarised light). Thus, the LCD would still be brighter in spite of the added presence of the photoluminescent cell between the light source and the LCD (instead of an absorbing polariser)./

Alternatively, the device may be electroluminescent device, for which purpose it may be provided with appropriate electrodes (e.g. Indium/Tin oxide). Such a device could be used as a backlight for an LCD or as a display device in its own right. Additionally there are many physical effects and photonic devices, such as optical storage devices, which would benefit from a source of highly circularly polarised light.

The invention will now be described, by way of example only, with reference to the following non-limiting Examples.

**<u>Example 1</u>**

**Preparation of (*S*)-2,7-*bis*{5-[4-(3,7-dimethyloct-6-enyloxy)phenyl]thien-2-yl}-9,9-dipropylfluorene.**

A mixture of 2,7-*bis*[5-(4-hydroxyphenyl)thien-2-yl]-9,9-dipropylfluorene (1.0 g, $1.7 \times 10^{-3}$ mol), (*S*)-(+)-citronellyl bromide (1.0 g, $4.6 \times 10^{-3}$ mol), and potassium carbonate (0.5 g, $3.6 \times 10^{-3}$ mol) in acetonitrile (10 $cm^3$) was heated under reflux for 24 h. Excess potassium carbonate was filtered off and precipitated product rinsed through with warm acetonitrile ($2 \times 10$ $cm^3$). The solution was concentrated onto silica gel for purification by column chromatography [silica gel, hexane:dichloromethane 3:1 eluting to hexane:dichloromethane 1:1] followed by recrystallisation from ethanol: dichloromethane to yield 0.58 g of (*S*)-2,7-*bis*{5-[4-(3,7-dimethyloct-6-enyloxy)phenyl]thien-2-yl}-9,9-dipropylfluorene, Tg, 23 ˚C; Cr-I, 123 ˚C; (N*-I, 122˚C). The PL and EL emission is yellow-green.

(The 2,7-*bis*[5-(4-hydroxyphenyl)thien-2-yl]-9,9-dipropylfluorene required as a starting materials was prepared described in Appendix 1).

The following compounds could be obtained analogously:

(*R*)-2,7-*bis* {5-[4-(3,7-Dimethyloct-6-enyloxy)phenyl]thien-2-yl}-9,9-dipropylfluorene, Tg, 29 ˚C; Cr-I, 123 ˚C; (N*-I, 122˚C).
(*S*)-2,7-*bis* {5-[4-(3-Methylpentyloxy)phenyl]thien-2-yl}-9,9-dipropylfluorene, Tg, 45 ˚C; Cr-I, 194˚C; (N*-I, 173 ˚C).

## Example 2

**Preparation of 2,7-*bis*(2-{4-[(*S*)-3,7-dimethyloct-6-enyloxy]phenyl}pyrimidine-5-yl)-9,9-dipropylfluorene.**

A mixture of tetrakis(triphenylphosphine)palladium(0) (0.06 g, 1.0 x $10^{-5}$ mol), 2,7-dibromo-9,9-dipropylfluorene (1 g, 2.45 x $10^{-3}$ mol), 2-{4-[(*S*)-3,7-dimethyloct-6-enyloxy]phenyl}pyrimidine boronic acid (2.16 g, 6.12 x $10^{-3}$ mol), 20% sodium carbonate solution (25 $cm^3$) and 1,2-dimethoxyethane (85 $cm^3$). The reaction mixture was heated under reflux overnight. The cooled reaction mixture was extracted with dichloromethane (2 x 100 $cm^3$) and the combined organic layers were washed with brine (2 x 50 $cm^3$) and dried ($MgSO_4$). After filtration the solvent was removed under reduced pressure and the residue was purified by column chromatography on silica gel using dichloromethane as the eluent followed by recrystallisation from dichloromethane/ethanol, to yield 1.23 g (58 %) of 2,7-*bis*(2-{4-[(*S*)-3,7-dimethyloct-6-enyloxy]phenyl}pyrimidine-5-yl)-9,9-dipropylfluorene, Tg, 24 ˚C; Cr-I, 113 ˚C; N*-I,120 ˚C. The PL and EL emission is blue.

The 2-{4-[(*S*)-3,7-dimethyloct-6-enyloxy]phenyl}pyrimidine boronic acid required as a starting material was prepared as described in Appendix 1.

## Example 3

**Preparation of 2,7-*bis*(5-{5-[(*S*)-3,7-dimethyloct-6-enyl]thien-2-yl} thien-2-yl)-9,9-dipropylfluorene.**

A mixture of 5-tributylestannyl-2-[(S)-3,7-dimethyloct-6-enyl]thiophene (2.23 g, 4.3 x $10^{-3}$ mol), 2,7-*bis*(5-bromothien-2-yl)-9,9-dipropylfluorene (1 g, 1.75 x $10^{-3}$ mol) and tetrakis(triphenylphosphine)-palladium (0) (0.2 g, 1.7 x $10^{-4}$ mol) in DMF (30 $cm^3$) was heated at 90˚C for 24 h. Dichloromethane (150 $cm^3$) was added and the solution washed with 20% hydrochloric acid (2 x 150 $cm^3$), water (100 $cm^3$), dried ($MgSO_4$) and concentrated onto silica gel for purification by column chromatography [silica gel, dichloromethane: hexane 1:4] to yield 1.05 g (70 %) of 2,7-*bi*s(5-{5-[(*S*)-3,7-dimethyloct-6-enyl]thien-2-yl} thien-2-yl)-9,9-dipropylfluorene, Tg, 23 ˚C; Cr-I, 123 ˚C ; (N*-I, 122 ˚C). The PL and EL emission is yellow-green.

The 5-tributylestannyl-2-[(*S*)-3,7-dimethyloct-6-enyl]thiophene required as a starting material was prepared as described in Appendix 1.

## Example 4

**Preparation of 4,7-*bis*(5-{4-[(*S*)-3,7-dimethyloct-6-enyloxy]phenyl}thien-2-yl)-2,1,3-benzothiadiazole**

A mixture of *tetrakis* (triphenylphosphine)palladium (0) (0.12 g, 1.1 x $10^{-4}$ mol), 4,7-*bis*(5-bromothien-2-yl)-2,1,3-benzothiadiazole (1 g, 2.18 x $10^{-3}$ mol), 4-[(*S*)-3,7-dimethyloct-6-enyloxy] phenyl boronic acid (1.5 g, 5.45 x $10^{-3}$ mol), 20% aqueous sodium carbonate solution (25 $cm^3$) and 1,2-dimethoxyethane (90 $cm^3$) was heated under reflux overnight. The cooled reaction mixture was extracted with dichloromethane (2 x 100 $cm^3$). The combined organic layers were washed with brine (2 x 50 $cm^3$), dried ($MgSO_4$), filtered and evaporated down under reduced pressure. The crude product was purified by column chromatography [silica gel, dichloromethane: hexane 1:4] followed by recrystallisation from dichloromethane/ethanol to yield 0.75 g (65 %) of 4,7-*bis (*5-{4-[(*S*)-3,7-d*imethyloct*-6-enyloxy]phenyl}thien-2-yl)-2,1,3-benzothiadiazole.

The 4,7-*bis*(5-bromothien-2-yl)-2,1,3-benzothiadiazole required as starting material was prepared as described in Appendix 1.

## Example 5

**Preparation of 2,7-*bis*(5-{4-[(*S*)-3-methyl-5-(1-vinylallyloxycarbonyl)pentyloxy] phenyl}thien-2-yl)-9,9-dipropylfluorene.**

A mixture of 2,7-*bis*[5-(4-hydroxyphenyl)thien-2-yl]-9,9-dipropylfluorene, 1-vinylallyl (S)-6-bromo-4-methylhexanoate and potassium carbonate and *N,N*-dimethylformamide was heated under reflux overnight. The cooled reaction mixture was evaporated down under reduced pressure and the crude product purified by column chromatography on silica gel using a mixture of dichloromethane/hexane (80:20) as eluent and recrystallisation from a dichloromethane/ethanol mixture to yield of 2,7-*bis*(5-{4-[(*S*)-3-methyl-5-(1-inylallyloxycarbonyl)pentyloxy]phenyl}thien-2-yl)-9,9-dipropylfluorene.

The 1-vinylallyl (*S*)-6-bromo-4-methylhexanoate required as starting material was prepared as described in Appendix 1.

## Example 6

### Preparation of a luminescent cell comprising a chiral nematic organic glass.

An evacuated cell made of two glass substrates, each bearing an Indium/Tin Oxide (ITO) electrode and a photoalignment layer, glued together with a UV curable glue containing spacers to form a uniform cell gap of 3.45 μm was filled with (S)-2,7-bis {5-[4-(3,7-dimethyloct-6-enyloxy)phenyl]thien-2-yl} -9,9-dipropylfluorene at 120˚C under an anhydrous nitrogen atmosphere. The flow direction of the chiral nematic phase was parallel to the alignment direction of the orientation layer. The filled cell was sealed with glue and then heated to a degree above the transition from the chiral nematic phase to the isotropic liquid (clearing point) and cooled it at a rate 0.2 ˚C per minute until it reached 5 ˚C below the clearing point. It was quenched to room temperature to form a chiral nematic glass. The cell is illuminated with a beam of collimated light at 350 nm from an argon ion laser. The stopband of the chiral nematic phase of (*S*)-2,7-*bis* {5-[4-(3,7-dimethyloct-6-enyloxyl]phenyl]thien-2-yl}-9,9-dipropylfluorene ranges from 458 nm to 554 nm. The addition of 2 wt% of (R)-1-phenyl-1,2-ethyl *bis*-4-(*trans*-4-pentylcyclohexyl)benzoate as a chiral dopant blue-shifts the stopband range by 10 nm. The circular extinction ratio at 500 nm is 170 in transmission and 16 in photoluminescence.

## Example 7

### Preparation of a electroluminescent cell comprising an achiral nematic glass and a chiral dopant.

A mixture of 2,7-*bis*(5-{4-[5-(1-vinyl-allyloxycarbonyl)pentyloxy] phenyl}thien-2-yl)-9,9-dipropylfluorene and (R)-1-phenyl-1,2-ethyl *bis*-4-(*trans*-4-pentylcyclohexyl)benzoate is processed as characterised as described in Example 6.

## Example 8

### Preparation of a electroluminescent cell comprising a chiral nematic organic polymer network.

A mixture of 2,7-*bis*(5-{4-[5-(1-vinylallyloxycarbonyl)pentyloxy] phenyl}thien-2-yl)-9,9-dipropylfluorene and (*R*)-1-phenyl-1,2-ethylene *bis*-4-(*trans*-4-pentylcyclohexyl)benzoate was processed as characterised as described in Example 6 using quartz substrates instead of glass substrates. The cell is exposed with rotating linearly polarized laser light of wavelength 300 nm or 325 nm. This is achieved by using a depolarised laser light source with a rotating polarizer in front of the cell. The cell is exposed from both sides to ensure efficient crosslinking throughout the sample. The cell is characterised as described in Example 6.

## Example 9

### Colour generation by energy transfer.

A cell is filled with a mixture of Coumarin 6 and an electroluminescent mesogen, such as those described in Examples 1-5, or mixture as described in Examples 6-8, as described in Example 6. The selective reflection band of the helix is tuned to match the emission spectrum of the dye. The mesogen is excited and excitation is transferred either radiatively or nonradiatively to the dye. Red circular polarised luminescence is observed from the dye.

## APPENDIX 1

### 1. Preparation of 2,7-*bis*[5-(4-hydroxyphenyl)thien-2-yl]-9,9-dipropylfluorene

(a). A 10*M* solution of *n*-butyllithium in hexanes (18.0 $cm^3$ 0.18 mol) was added slowly to a solution of fluorene (30.0 g, 0.18 mol) in THF (350 $cm^3$) at -50˚C. The solution was stirred for 1 h at -75 ˚C and 1-bromopropane (23.0 g, 0.19 mol) was added slowly. The solution was allowed to warm to RT and then stirred for a further 1 h. Dilute hydrochloric

acid (100 $cm^3$, 20%) and water (100 $cm^3$) were added and the product extracted into diethyl ether (3 × 150 $cm^3$). The ethereal extracts were dried ($MgSO_4$) and concentrated to yield 37.5 g of 9-propylfluorene as an oil.

(b). A 2.5M solution of n-butyllithium in hexanes (29.0 $cm^3$, 0.073 mol) was added slowly to a solution of 9-propylfluorene (15.0 g, 0.072 mol) in tetrahydrofuran at - 50°C. The solution was stirred for 1 h at -75°C, 1-bromopropane (10.0 g, 0.092 mol) was added slowly and the temperature raised to RT after completion of the addition. After 18 h, 20% hydrochloric acid (100 $cm^3$) and water (100 $cm^3$) were added and the product extracted into diethyl ether (2 x 100 $cm^3$). The organic extracts were dried ($MgSO_4$) and concentrated to a pale brown oil, which crystallised overnight at RT. The product was purified by recrystallisation from methanol to yield 14.5 g of 9,9-dipropylfluorene, mp 47-49°C.

(c). Bromine (10.0 g, 0.063 mol) was added to a stirred solution of 9,9-dipropylfluorene (7.0 g, 0.028 mol) in chloroform (25 $cm^3$) and the solution stirred for 0.5 h. Chloroform (50 $cm^3$) was added and the solution washed with saturated sodium metabisulphite solution (75 $cm^3$), water (75 $cm^3$), dried ($MgSO_4$) and concentrated to yield 11.3 g of 2,7-dibromo-9,9-dipropylfluorene, mp 134-137°C.

(d). A mixture of 2,7-dibromo-9,9-dipropylfluorene (6.0 g, 0.015 mol), 2-(tributylstannyl)thiophene (13.0 g, 0.035 mol) and *tetrakis*(triphenylphosphine)-palladium (0) (0.3 g, $2.6 \times 10^{-4}$ mol) in *N,N*-dimethylformamide (30 $cm^3$) was heated at 90°C for 24 h. Dichloromethane (200 $cm^3$) was added to the cooled reaction mixture, which was washed with 20% hydrochloric acid (2 x 50 $cm^3$), then water (100 $cm^3$), dried ($MgSO_4$ and concentrated onto silica gel for purification by column chromatography [silica gel, dichloromethane:hexane 1:1]. The compound was further purified by recrystallisation from dichloromethane: ethanol to yield 4.3 g of 2,7-bis(thien-2-yl)-9,9-dipropylfluorene, mp 165-170°C.

(e). *N*-Bromosuccinimide[1] (2.1 g, 0.012 mol) was added slowly to a stirred solution of 2,7-*bis*(thien-2-yl)-9,9-dipropylfluorene (2.3 g, $5.55 \times 10^{-3}$ mol) in chloroform (25 $cm^3$) and glacial acetic acid (25 $cm^3$). The solution was heated under reflux for 1 h, dichloromethane (100 $cm^3$) added to the cooled reaction mixture, washed with water (100 $cm^3$), 20% hydrochloric acid (150 $cm^3$), saturated aqueous sodium metabisulphite solution (50 $cm^3$), and dried ($MgSO_4$). The solvent was removed in vacuo and the product purified by recrystallisation from an ethanol/dichloromethane mixture to yield 2.74 g of 2,7-*bis*(5-bromothien-2-yl)-9,9-dipropylfluorene, mp 160-165 °C.
[1] freshly purified by recrystallisation from water

(f). A mixture of 2,7-*bis*(5-bromothien-2-yl)-9,9-dipropylfluorene (2.7 g, $4.7 \times 10^{-3}$ mol), 4-(methoxyphenyl)boronic acid (2.2 g, 0.014 mol), *tetrakis* (triphenylphosphine)palladium (0) (0.33 g, $2.9 \times 10^{-4}$ mol), sodium carbonate (3.0 g, 0.029 mol) and water (20 $cm^3$) in dimethoxyethane (100 $cm^3$) was heated under reflux for 24 h. More 4-(methoxyphenyl)boronic acid (1.0 g, $6.5 \times 10^{-3}$ mol) was added to the cooled reaction mixture, which was then heated under reflux for a further 24 h. *N,N*-dimethyl formamide (20 $cm^3$) was added and the solution heated at 110°C for 24 h, cooled and 20% hydrochloric acid (100 $cm^3$) added. The cooled reaction mixture was extracted with diethyl ether (2 x 50 $cm^3$) and the combined organic extracts washed with water (100 $cm^3$), dried ($MgSO_4$), and concentrated onto silica gel to be purified by column chromatography [silica gel, dichloromethane:hexane 1:1] and recrystallisation from an ethanol-dichloromethane mixture to yield 1.9 g (63%) of 2,7-*bis*[S-(4-methoxyphenyl)thien-2-yl]-9,9-dipropylfluorene, Cr-N, 235 °C; N-I, 265 °C.

(g). A 1*M* solution of boron tribromide in chloroform (9 $cm^3$, 9.0 mmol) was added dropwise to a stirred solution of 2,7-*bis*[5-(4-methoxyphenyl)thien-2-yl]-9,9-dipropylfluorene (1.3 g, $2.1 \times 10^{-3}$ mol) at 0°C. The temperature was allowed to rise to RT overnight and the solution added to ice-water (200 $cm^3$) with vigorous stirring. The product was extracted into diethyl ether (2 x 100 $cm^3$), washed with a 2*M* aqueous sodium carbonate solution (150 $cm^3$), dried ($MgSO_4$) and purified by column chromatography [silica gel dichloromethane:diethyl ether:ethanol 40:4:1] to yield 1.2 g of 2,7-*bis*[5-(4-hydroxyphenyl)thien-2-yl]-9,9-dipropylfluorene, Cr-I, 277 °C; N-I, 259 °C.

**2. Preparation of 2-{4-[(*S)*-3,7-dimethyloct-6-enyloxy]phenyl}pyrimidine boronic acid.**

(a). A mixture of 4-bromophenol (34.6 g, 0.20 mol), (S)-(+)-citronelyl bromide (50g, 0.023 mol) and potassium carbonate (45 g, 0.33 mol) in butanone (500 $cm^3$) was heated under reflux overnight. The cooled reaction mixture was filtered and the filtrate concentrated under reduce pressure. The crude product was purified by fractional distillation to yield 42.3 g (68.2%) of 1-bromo-4-[(*S*)-3,7-dimethyloct-6-enyloxy]benzene.

(b). 2.5M n-Butylithium in hexanes (49.3 $cm^3$, 0.12 mol) was added dropwise to a cooled (-78 ˚C) solution of 1-bromo-4-[(*S*)-3,7-dimethyloct-6-enyloxy]benzene (35 g, 0.11 mol) in tetrahydrofuran (350 $cm^3$). The resultant solution was stirred at this temperature for 1 h and then trimethyl borate (23.8 g, 0.23 mol) was added dropwise to the mixture while maintaining the temperature at -78 ˚C. 20% hydrochloric acid (250 $cm^3$) was added and the resultant mixture was stirred for 1h and then extracted into diethyl ether (2 x 200 $cm^3$). The combined organic layers were washed with water (2 x 100 $cm^3$) and dried ($MgSO_4$). After filtration the solvent was removed under reduce pressure to yield 20.35 g (65 %) of 4-[(*S*)-3,7-dimethyloct-6-enyloxy]phenyl boronic acid.

(c). A mixture of tetrakis(triphenylphosphine)palladium(0) (2 g, 1.73 x $10^{-3}$ mol), 5-bromo-2-iodopyrimidine (10 g, 3.5 x $10^{-2}$ mol), 4-(3,7-dimethyl-oct-6enyloxy)phenyl boronic acid (10.6 g, 3.85 x $10^{-2}$ mol), 20% sodium carbonate solution (50 $cm^3$) and 1,2-dimethoxyethane (150 $cm^3$). The reaction mixture was heated under reflux overnight. The cooled reaction mixture was extracted with dichloromethane (2 x 100 $cm^3$) and the combined organic layers were washed with brine (2 x 50 $cm^3$) and dried ($MgSO_4$). After filtration the solvent was removed under reduced pressure and the residue was purified by column chromatography on silica gel using dichloromethane as the eluent followed by recrystallisation from ethanol to yield 7.5 g (55.1%) of 5-bromo-2- {4-[(*S*)-3,7-dirnethyloct-6-enyloxy]phenyl} pyrimidine.

(d). 2.5*M n*-Butylithium in hexanes (8.72 $cm^3$, 2.18 x $10-^2$ mol) was added dropwise to a cooled (-78 ˚C) solution of bromo-2-{4-[(*S*)-3,7-dimethyloct-6-enyloxy] phenyl}pyrimidine (7 g, 1.81 x $10-^2$ mol) in tetrahydrofuran (150 $cm^3$). The resultant solution was stirred at this temperature for 1 h and then trimethyl borate (3.7 g, 3.59 x $10-^2$ mol) was added dropwise to the mixture while maintaining the temperature at -78 ˚C. On complete addition the mixture was allowed to warm to room temperature overnight. 20% hydrochloric acid (250 $cm^3$) was added and the resultant mixture stirred for 1 h and then extracted into dichloromethane (2 x 200 $cm^3$). The combined organic layers were washed with water (2 x 100 $cm^3$) and dried ($MgSO_4$). After filtration the solvent was removed under reduce pressure to yield 4.2 g (65 %) of 2-{4-[(*S*)-3,7-dimethyloct-6-enyloxy] phenyl}pyrimidine boronic acid.

**3. Preparation of 5-tributylestannyl-2-[(*S*)-3,7-dimethyloct-6-enyl]thiophene**

(a). 2.5M *n*-Butyllithium in hexanes (62.$cm^3$, 0.155 mol) was added slowly to a solution of thiophene (12.6 g, 0.15 mol) in tetrahydrofuran (150 $cm^3$) at -78˚C. The solution was stirred for 1 h at -78˚C, (S)-(+)-citronelyl bromide (35 g, 0.16 mol) was added slowly and the temperature raised to RT after completion of the addition. 20% hydrochloric acid (100 $cm^3$) and water (100 $cm^3$) were added and the product extracted into diethyl ether (2 x 100 $cm^3$). The organic extracts were dried ($MgSO_4$), filtered and evaporated down under partially reduced pressure. The crude product was purified by distillation to yield 17.6 g (54 %) of 2-[(S)-3,7-dimethyloct-6-enyl]thiophene.

(b). 2.5M n-Butyllithium in hexanes (41.2 $cm^3$, 0.1 mol) was added slowly to a solution of 2-[(S)-3,7-dimethyloct-6-enyl]thiophene (17.6 g, 0.08 mol) in tetrahydrofuran (dry, 100 $cm^3$) at -78˚C. The solution was stirred for 1 h at -78˚C, tri-n-butyltin chloride (39 g, 0.12 mol) was added slowly and the temperature allowed to rise to RT after completion of the addition. 20% Hydrochloric acid (100 $cm^3$) and water (100 $cm^3$) were added and the product extracted into diethyl ether (2x 100 $cm^3$). The organic extracts were dried ($MgSO_4$), filtered and evaporated down under partially reduced pressure. The crude product was purified by distillation to yield 21.0 g (51 %) of 5-tributylestannyl-2-[(S)-3,7-dimethyloct-6-enyl]thiophene.

**4. 4,7-*bis*(5-bromothien-2-yl)-2,1,3-benzothiadiazole**

(a). Bromine (52.8 g, 0.33mol) was added to a solution of 2,1,3-benzothiadiazole (8.1 g, 0.032 mol) in 47% hydrobromic acid (100 $cm^3$) and the resultant solution heated under reflux for 2.5 h. The cooled reaction mixture was filtered and the solid residue washed with water (200 $cm^3$) and sucked dry. The crude product was purified by recrystallisation from ethanol to yield 21.0 g (65 %) of 4,7-dibromo-2,1,3-benzothiadiazole.

(b). A mixture of 4,7-dibromo-2,1,3-benzothiadiazole (5.0 g, 0.016 mol), 2-(tributylstannyl)thiophene (15.7 g, 0.042 mol) and tetrakis(triphenylphosphine)palladium(0) (0.3 g, 2.6 $\times$ $10^{-4}$ mol) in *N,N*-dimethylformamide (50 $cm^3$) was heated at 90 ˚C for 24 h. Dichloromethane (200 $cm^3$) was added to the cooled reaction mixture. The resultant solution was washed with 20% hydrochloric acid (2 x 150 $cm^3$) and water (100 $cm^3$), dried ($MgSO_4$) and then

concentrated onto silica gel for purification by column chromatography [silica gel, dichloromethane: hexane 1:4]. The compound was further purified by recrystallisation from dichloromethane: ethanol to yield 3.8 g (79%) of 4,7-*bis*(5-bromothien-2-yl)-2,1,3-benzothiadiazole.

(c). *N*-Bromosuccinimide (3.73 g, 0.021 mol freshly purified by recrystallisation from water) was added slowly to a stirred solution of compound 4,7-*bis*(5-bromothien-2-yl)-2,1,3-benzothiadiazole (3 g, 0.01 mol) in chloroform (100 $cm^3$) and glacial acetic acid (100 $cm^3$). The solution was heated under reflux for 1 h, dichloromethane (100 $cm^3$) added, washed with water (100 $cm^3$), 20% hydrochloric acid (150 $cm^3$), saturated aqueous sodium sulphite solution (50 $cm^3$), and dried ($MgSO_4$). The solvent was removed under reduced pressure and the product purified by recrystallisation from toluene to yield 3.2 g (70 %) of 4,7-*bis*(5-bromothien-2-yl)-2,1,3-benzothiadiazole.

**5. Preparation of 1-vinylallyl (*S*)-6-bromo-4-methylhexanoate**

(a). A solution of *m*-chloroperbenzoic acid (28.1 g) and dichloromethane (150 $cm^3$) was added dropwise to a cooled (ice bath) solution of (*S*)-(+)-citronellyl bromide (25.0 g) and dichloromethane (250 $cm^3$) at a rate sufficient to maintain the temperature below 10 ˚C. After the addition was complete, the mixture was stirred at 0 ˚C for 15 h. The reaction mixture was filtered to remove precipitated *m*-chlorobenzoic acid and the filtrate washed with an aqueous saturated sodium hydrogen sulphite solution (150 $cm^3$). The organic layer was separated off, dried ($MgSO_4$), filtered and then evaporated down under reduced pressure to yield 24.3 g, (90.3%) of 3-[(*S*)-*5*-bromo-3-methylpentyl]-2,2-dimethyloxirane.

(b). Periodic acid (12.1 g, 0.0590 mol) was added portion wise to a solution of 3-[(*S*)-5-bromo-3-methylpentyl]-2,2-dimethyloxirane (12.4 g, 0.0529 mol) in tetrahydrofuran (500 $cm^3$) at room temperature. After the addition was complete the reaction mixture was stirred for 0.5 h and then poured onto water (500 $cm^3$). Most of the tetrahydrofuran was removed under reduced pressure and the resultant aqueous layer extracted with diethyl ether (3 x 500 $cm^3$). The combined organic layers were dried ($MgSO_4$), evaporated down under partially reduced pressure and the residue purified by column chromatography on silica gel[2] using a mixture of ethyl acetate/hexane (1:9) as eluent to yield 5.6 g (55.1%) of (*S*)-6-bromo-4-methylhexanal.
[2]The silica gel was pre-treated with a triethylamine/hexane (1:9) solution in order to prevent decomposition of the aldehyde during chromatography.

(c). Jones' reagent[3] was added dropwise to a solution of (*S*)-6-bromo-4-methylhexanal (5.0 g, 0.026 mol) in acetone (30 $cm^3$) at 0 ˚C at such a rate as to maintain the temperature of the solution below 10 ˚C. Upon completion of the oxidation propan-2-ol (12 $cm^3$) was added and the reaction mixture stirred at room temperature for 15 min., poured onto water (100 $cm^3$) and then extracted with diethyl ether (3 x 100 $cm^3$). The combined organic layers were washed with brine (2 x 100 $cm^3$), dried ($MgSO_4$ and then evaporated down under partially reduced pressure. The crude product was purified by column chromatography on silica gel using a mixture of ethyl acetate/hexane (1:9) as eluent to yield 3.8 g (69.3%) of (S)-6-bromo-4-methylhexanoic acid, which was used without further purification.
[3] [$CrO_3$ 1.5 g; concentrated $H_2SO_4$ 0.54 $cm^3$; $H_20$, 9 $cm^3$.]

(d). A solution of *N,N* dicyclohexylcarbodiimide (4.8 g, 0.023 mol) in dichloromethane (50 $cm^3$) was added to a solution of (S)-6-bromo-4-methylhexanoic acid (3.0 g, 0.023 mol), 1,4-pentadien-3-ol (1.7 g, 0.02 mol) and 4-(dimethylamino)pyridine (0.4 g) in dichloromethane (150 $cm^3$) at 0 ˚C. The reaction solution was stirred at room temperature overnight, filtered to remove precipitate and then evaporated down under reduced pressure. The crude product was purified by column chromatography on silica gel using a mixture of dichloromethane/hexane (50:50) as eluent to yield 1-vinylallyl (S)-6-bromo-4-methylhexanoate.

**References**

[1] S. M. Kelly, in "Flat Panel Displays: Advanced Organic Materials", RSC, 2000.
[2] C. H. Chen, J. Shi, C. W. Tang, Macromol. Symp. 1997,125, 1.
[3] M. Grell, D. D. C. Bradley, Adv. Mater. 1999, 11, 895.
[4] D. D. C. Bradley, Curr. Opin. Solid State Mater. Sci. 1996, 1, 789.
[5] M. Jandke, P. Strohriegl, J. Gmeiner, W. Brütting, M. Schwoerer, Adv. Mater. 1999,11,1518.

[6] M. Grell, W. Knoll, D. Lupo, A. Meisel, T. Miteva, D. Neher, H. Nothofer, U. Scherf, A. Yasuda, Adv. Mater. 1999, 11, 671.
[7] P. Dyreklev, M. Berggren, O. Inganäs, M. R. Anderson, O. Wennerström, T. Hjertberg, Adv. Mater. 1995, 7, 43.
[8] U. Lemmer, D. Vacar, D. Moses, A. J. Heeger, T. Ohnishi, T. Noguchi, Appl. Phys. Lett. 1996, 68, 21.
[9] K. Pichler, R. H. Friend, P. L. Burn and A. B. Holmes, Synth. Metals 1993, 55-57, 454.
[10] V. Cimrová, M. Remmers, D. Neher, G. Wegner, Adv. Mater. 1996, 8, 146.
[11] T. W. Hagler, K. Pakbaz, K. F. Voss, A. J. Heeger, Phys. Rev. B 1991, 44, 8652.
[12] N. A. J. M. van Aerle, M. Barmentlo, R. W. J. Hollering, J. Appl. Phys. 1993, 74, 3111.
[13] R. A. M. Hikmet, D. B. Braun, A. G. J. Staring, H. F. M. Schoo, J. Lub, Int. Pat. Appl. WO 97/07654 1995.
[14] A. Bacher, P. G. Bentley, D. D. C. Bradley, L. K. Douglas, P. A. Glarvey, M. Grell, K. S. Whitehead, M. L. Turner, J. Mat. Chem. 1999, 9, 2985.
[15] A. P. Davey, R. G. Howard, W. J. Blau, J. Mater. Chem. 1997, 7, 417.
[16] A. E. A. Contoret, S. R. Farrar, P. O. Jackson, L. May, M. O'Neill, J. E. Nicholls, S. M. Kelly and G. J. Richards, Adv. Mater., 2000,12, 971.
[17] S. R. Farrar, A. E. A. Contoret, M. O'Neill, G. J. Richards and S. M. Kelly, Phys. Rev B., to be submitted.
[18] A. E. A. Contoret, S. R. Farrar, M. O'Neill, J. E. Nicholls, G. J. Richards, S. M. Kelly, and A. W. Hall, Chem. Mater., in press.
[19] H. Shi, B. M. Conger, D. Katsis, S. H. Chen, Liq. Cryst., 1998, 24, 163.
[20] E. Peeters, M. P. T. Cristiaans, R. A. J. Jannsen, H. F. M. Schoo, H. P. J. M. Dekkers, E. W. Meijer, J. Am./ Chem. Soc., 1997, 119, 9909.
[21] M. Oda, H.-G. Nothofer, G. Lieser, U. Scherf, S. C. J. Meskers, D. Neher, Adv. Mater., 2000, 12, 362.
[22] S. H. Chen, D. Katsis,A. W. Schmid, J. C. Mastrangelo, T. Tsutsui, T. N. Blanton, Nature, 1999, 397, 385.
[23] C. P. Lin, T. Tsutsui,, S. Saito, S. H. Chen, J. C. Mastrangelo, H. Shi, Mat. Res. Soc. Symp. Proc., 1996, 425,233.
[24] T. Tsutsui,, C. P. Lin, S. Saito, S. H. Chen, H. Shi, J. C. Mastrangelo, Mat. Res. Soc. Symp. Proc., 1996, 425, 225.

## Claims

1. A composition capable of emitting circularly polarised light comprising a medium including a chiral, helical liquid crystalline phase with a substantially fixed, temperature independent helical pitch, said liquid crystalline phase being comprised of calamatic liquid crystal molecules having a luminescent moiety and the composition being such that excitation of the luminescent moiety causes the medium to emit light in the bandwidth of selective reflection of the liquid crystalline phase.

2. A composition as claimed in claim 1 wherein the chiral, helical liquid crystalline phase is a chiral nematic liquid crystalline phase.

3. A composition as claimed in claim 1 wherein the chiral, helical liquid crystalline phase is a chiral, smectic C liquid crystalline phase.

4. A composition as claimed in any one of claims 1 to 3 wherein the liquid crystalline phase is a glass.

5. A composition capable of emitting circularly polarised light comprising a medium including a chiral, helical liquid crystalline phase in the form of a glass, said liquid crystalline phase being comprised of calamatic liquid crystal molecules having a luminescent moiety and the composition being such that excitation of the luminescent moiety causes the medium to emit light in the bandwidth of selective reflection of the liquid crystalline phase.

6. A composition as claimed in claim 4 or 5 wherein the glass transition temperature ($T_g$) of the calamatic liquid crystal molecules is greater than 50˚C.

7. A composition as claimed in any one of claims 1 to 3 wherein the calamatic liquid crystal molecules are present in the form of a polymerised network.

8. A composition capable of emitting circularly polarised light comprising a medium including a chiral, helical liquid crystalline phase in the form of a polymerised network, said liquid crystalline phase being comprised of calamatic liquid crystal molecules having a luminescent moiety and the composition being such that excitation of the luminescent moiety causes the medium to emit light in the bandwidth of selective reflection of the liquid crystalline phase.

**9.** A composition as claimed in any one of claims 1 to 8 wherein the luminescent moiety of the calamatic liquid crystal molecules is an electroluminescent moiety.

**10.** A composition as claimed in any one of claims 1 to 9 wherein the emission spectrum of the moiety is tuned to the bandwidth of selective reflection of the liquid crystalline phase.

**11.** A composition as claimed in any one of claims 1 to 9 wherein the composition incorporates a dye capable of absorbing the emission of the luminescent moiety and re-emitting light having a wave length in the bandwidth of selective reflection.

**12.** A composition as claimed in any one of claims 1 to 9 wherein the composition incorporates a dye which can be excited by non-radiative transfer from the liquid crystal molecules to the dye.

**13.** A composition as claimed in any one of claims 1 to 12 wherein the luminescent moiety of the calamatic liquid crystalline molecules is an electroluminescent moiety.

**14.** A composition as claimed in any one of claims 1 to 12 wherein the luminescent moiety of the calamatic liquid crystal molecules is a photoluminescent moiety.

**15.** A composition as claimed in any one of claims 1 to 14 wherein the liquid crystal molecules are whole transporting or electron transporting.

**16.** A composition as claimed in any one of claims 1 to 15 wherein the calamatic liquid crystal molecules include at least one chiral centre.

**17.** A composition as claimed in claim 16 wherein the liquid crystalline phase comprises chiral and achiral liquid crystal molecules.

**18.** A composition as claimed in any one of claims 1 to 15 wherein the calamatic liquid crystal molecules are achiral and the liquid crystalline phase includes a chiral dopant.

**19.** A composition as claimed in any one of claims 1 to 18 wherein the calamatic liquid crystal molecules incorporate a luminescent core comprised of 4 to 6 conjugated aromatic rings, said core being attached to two aliphatic spacer groups.

**20.** A composition as claimed in claim 19 wherein the aliphatic spacer groups each contain a chain of 4 to 16 carbon atoms.

**21.** A composition as claimed in claim 19 or 20 wherein the core includes a fluorene moiety.

**22.** A composition as claimed in any one of claims 19 to 21 wherein the calamatic liquid crystal molecules are of the formula:

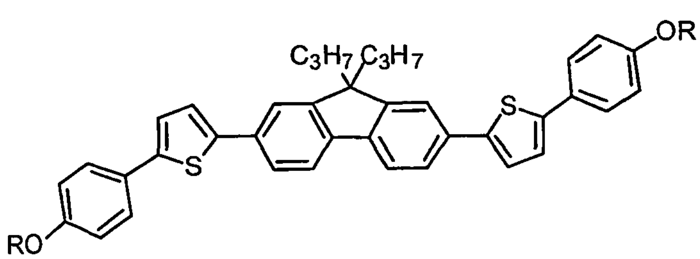

wherein each R is the same or different and represents the spacer group.

**23.** A composition as claimed in claim 22 wherein one or both of the R groups incorporate a chiral centre.

**24.** A composition as claimed in claim 23 wherein each R group is of the formula:

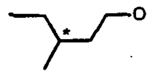

**25.** A composition as claimed in claim 23 wherein each R group is of the formula:

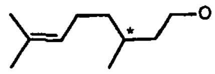

**26.** A composition as claimed in claim 23 wherein each R group is of the formula:

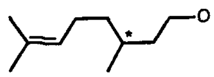

**27.** A light emitting device comprised of a cell having a pair of opposed sides and containing a composition as claimed in any one of claims 1 to 26, at least one of said sides being transparent to the polarised light emitted by said composition on excitation of the luminescent moiety.

**28.** A device as claimed in claim 27 wherein the spacing between said opposed sides is to 1 to 10μm.

**29.** A device as claimed in claim 27 or 28 which is capable of being excited by polarised and/or unpolarised light.

**30.** A device as claimed in any one of claims 27 to 29 capable of emitting circular polarised laser emission.

**31.** A device as claimed in any one of claims 27 to 30 which is an OLED.

**32.** The combination of a light emitting device as claimed in any one of claims 27 to 31 and a Liquid Crystal Display device, said light emitting device providing a source of polarised light for the Liquid Crystal Display device.

**33.** A method of producing a light emitting device as claimed in any one of claims 29 to 32 providing a cell having a pair of opposed walls at least one of which is provided on its interior surface with an alignment layer and filling the cell with a formulation which is a precursor to the composition of any one of claims 1 to 26, which incorporates calamatic liquid crystal molecules having a luminescent moiety and which is capable of being assembled by said alignment layer(s) to a chiral, helical liquid crystalline phase, assembling said formulation into said liquid crystalline phase, and immobilising said phase so as to provide the latter with a fixed, temperature dependent helical pitch.

**34.** A method as claimed in claim 33 wherein the or each alignment layer is a photoalignment layer.

## Patentansprüche

**1.** Zusammensetzung, die zum Emittieren von zirkular polarisiertem Licht in der Lage ist, aufweisend ein Medium unter Einbeziehung einer chiralen, helikalen flüssigkristallinen Phase mit einer im Wesentlichen fixierten, temperaturunabhängigen helikalen Ganghöhe, wobei die flüssigkristalline Phase calamatische Flüssigkristall-Moleküle mit einem lumineszenten Teil aufweist und die Zusammensetzung so beschaffen ist, dass eine Anregung des lumineszenten Teils das Medium dazu bringt, Licht in der Bandbreite der Selektivreflexion der flüssigkristallinen Phase zu emittieren.

**2.** Zusammensetzung nach Anspruch 1, worin die chirale, helikale flüssigkristalline Phase eine chirale nematische

flüssigkristalline Phase ist.

3. Zusammensetzung nach Anspruch 1, worin die chirale, helikale flüssigkristalline Phase eine chirale, smektische C-flüssigkristalline Phase ist.

4. Zusammensetzung nach einem der Ansprüche 1 bis 3, worin die flüssigkristalline Phase ein Glas ist.

5. Zusammensetzung, die zum Emittieren von zirkular polarisiertem Licht in der Lage ist, aufweisend ein Medium unter Einbeziehung einer chiralen, helikalen flüssigkristallinen Phase in Form eines Glases, wobei die flüssigkristalline Phase calamatische flüssigkristalline Moleküle mit einem lumineszenten Teil aufweist und die Zusammensetzung so beschaffen ist, dass eine Anregung des lumineszenten Teils das Medium dazu bringt, Licht in der Brandbreite der Selektivreflexion der flüssigkristallinen Phase zu emittieren.

6. Zusammensetzung nach Anspruch 4 oder 5, wobei die Glasübergangstemperatur ($T_g$) der calamatischen Flüssigkristall-Moleküle größer ist als 50˚C.

7. Zusammensetzung nach einem der Ansprüche 1 bis 3, worin die calamatischen Fltissigkristall-Moleküle in Form eines polymerisierten Netzwerkes vorliegen.

8. Zusammensetzung, die zum Emittieren von zirkular polarisiertem Licht in der Lage ist, aufweisend ein Medium unter Einbeziehung einer chiralen, helikalen flüssigkristallinen Phase in Form eines polymerisierten Netzwerkes, wobei die flüssigkristalline Phase calamatische Flüssigkxistall-Moleküle mit einem lumineszenten Teil aufweist und die Zusammensetzung derart beschaffen ist, dass eine Anregung des lumineszenten Teils das Medium zum Emittieren von Licht in der Bandbreite der Selektivreflexion der flüssigkristallinen Phase bringt.

9. Zusammensetzung nach einem der Ansprüche 1 bis 8, wobei der lumineszente Teil der calamatischen Flüssigkristall-Moleküle ein elektrolumineszenter Teil ist.

10. Zusammensetzung nach einem der Ansprüche 1 bis 9, wobei das Emissionsspektrum des Teils auf die Bandbreite der Selektivreflexion der flüssigkristallinen Phase abgestimmt ist.

11. Zusammensetzung nach einem der Ansprüche 1 bis 9, wobei in die Zusammensetzung ein Farbstoff einbezogen ist, der zum Absorbieren der Emission des lumineszenten Teils in der Lage ist sowie zur Reemission von Licht mit einer Wellenlänge in der Bandbreite der Selektivreflexion.

12. Zusammensetzung nach einem der Ansprüche 1 bis 9, wobei in die Zusammensetzung ein Farbstoff einbezogen ist, der durch strahlungslosen Übergang von den Flüssigkristall-Molekülen zu dem Farbstoff angeregt werden kann.

13. Zusammensetzung nach einem der Ansprüche 1 bis 12, wobei der lumineszente Teil der calamatischen Flüssigkristall-Moleküle ein elektrolumineszenter Teil ist.

14. Zusammensetzung nach einem der Ansprüche 1 bis 12, wobei der lumineszente Teil der calamatischen Flüssigkristall-Moleküle ein photolumineszenter Teil ist.

15. Zusammensetzung nach einem der Ansprüche 1 bis 14, wobei die Flüssigkristall-Moleküle Loch-transportierend oder Elektronen-transportierend sind.

16. Zusammensetzung nach einem der Ansprüche 1 bis 15, wobei die calamatischen Flüssigkristall-Moleküle mindestens ein chirales Zentrum einschließen.

17. Zusammensetzung nach Anspruch 16, wobei die flüssigkristalline Phase chirale und achirale Flüssigkristall-Moleküle aufweist.

18. Zusammensetzung nach einem der Ansprüche 1 bis 15, wobei die calamatischen Flüssigkristall-Moleküle achiral sind und die flüssigkristalline Phase ein chirales Dotierungsmittel einschließt,

19. Zusammensetzung nach einem der Ansprüche 1 bis 18, wobei in die calamatischen Flüssigkristall-Moleküle ein lumineszenter Kern einbezogen ist, der 4 bis 6 konjugierte aromatische Ringe aufweist, und wobei der Kern an zwei

aliphatischen Abstandhaltenden Gruppen gebunden ist.

**20.** Zusammensetzung nach Anspruch 19, wobei die aliphatischen Abstandhaltenden Gruppen jeweils eine Kette von 4 bis 16 Kohlenstoffatomen enthalten.

**21.** Zusammensetzung nach Anspruch 19 oder 20, wobei der Kern ein Fluoren-Teil einschließt.

**22.** Zusammensetzung nach einem der Ansprüche 19 bis 21, wobei die calamatischen Flüssigkristall-Moleküle die Formel haben:

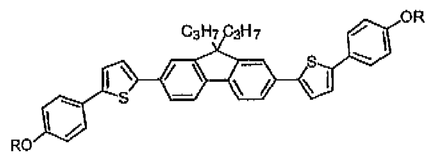

worin jedes R gleich oder verschieden ist und die Abstandhaltende Gruppe darstellt.

**23.** Zusammensetzung nach Anspruch 22, wobei in eine oder beide R-Gruppen ein Chiralitätszentrum einbezogen ist.

**24.** Zusammensetzung nach Anspruch 23, worin jede R-Gruppe die Formel hat:

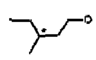

**25.** Zusammensetzung nach Anspruch 23, worin jede R-Crruppe die Formel hat:

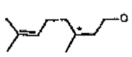

**26.** Zusammensetzung nach Anspruch 23, worin jede R-Gruppe die Formel hat:

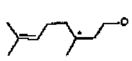

**27.** Lichtemittierende Vorrichtung, aufweisend eine Zelle mit einem Paar gegenüberliegender Seiten und enthaltend eine Zusammensetzung nach einem der Ansprüche 1 bis 26, wobei mindestens eine der Seiten für das polarisiertes Licht transparent ist, das von dieser Zusammensetzung bei Anregung des lumineszenten Teils emittiert wird.

**28.** Vorrichtung nach Anspruch 27, wobei der Abstand zwischen den gegenüberliegenden Seiten 1 bis 10 μm beträgt.

**29.** Vorrichtung nach Anspruch 27 oder 28, die durch polarisiertes und/oder unpolarisiertes Licht angeregt werden kann.

**30.** Vorrichtung nach einem der Ansprüche 27 bis 29, die zum Emittieren von zirkular polarisierter Laserstrahlung in der Lage ist.

**31.** Vorrichtung nach einem der Ansprüche 27 bis 30, die ein OLED ist.

**32.** Kombination einer lichtemittierenden Vorrichtung nach einem der Ansprüche 27 bis 31 und eine Flüssigkristall-Displayvorrichtung, wobei die lichtemittierende Vorrichtung eine Quelle für polarisiertes Licht für die Flüssigkristall-Displayvorrichtung bereitstellt.

**33.** Verfahren zum Herstellen einer lichtemittierenden Vorrichtung nach einem der Ansprüche 29 bis 32, welches Verfahren umfasst: Bereitstellen einer Zelle, die über ein Paar gegenüberliegender Wandungen verfügt, von denen mindestens eine auf ihrer Innenseite mit einer Orientierungsschicht versehen ist; und Füllen der Zelle mit einer

Formulierung, die ein Präkursor für die Zusammensetzung nach einem der Ansprüche 1 bis 26 ist und in die calamatische Flüssigkristall-Moleküle mit einem lumineszenten Teil einbezogen sind und die mit Hilfe der Ozieotierungsschicht(en) zu einer chiralen, helikalen flüssigkristallinen Phase zusammengesetzt werden kann; Einsetzen der Formulierung in die flüssigkristalline Phase sowie Immobilisieren der Phase, um die Letztere auf diese Weise mit einer fixierten, temperaturunabhängigen helikalen Ganghöhe zu versehen.

**34.** Verfahren nach Anspruch 33, wobei die oder jede Orientierungsschicht eine Photoorientierungsschicht ist.

## Revendications

**1.** Composition capable d'émettre une lumière circulairement polarisée comprenant un milieu incluant une phase de cristaux liquides chirale, hélicoïdale avec un pas hélicoïdal substantiellement fixe, indépendant de la température, ladite phase de cristaux liquides étant composée de molécules de cristaux liquides calamatiques possédant une fraction luminescente et la composition étant telle qu'une excitation de la fraction luminescente entraîne le milieu à émettre une lumière dans la largeur de bande de réflexion sélective de la phase de cristaux liquides.

**2.** Composition suivant la revendication 1, dans laquelle la phase de cristaux liquides chirale, hélicoïdale est une phase de cristaux liquides chirale nématique.

**3.** Composition suivant la revendication 1, dans laquelle la phase de cristaux liquides chirale, hélicoïdale est une phase de cristaux liquides chirale, smectique C.

**4.** Composition suivant l'une quelconque des revendications 1 à 3, dans laquelle la phase de cristaux liquides est un verre.

**5.** Composition capable d'émettre une lumière circulairement polarisée comprenant un milieu incluant une phase de cristaux liquides chirale, hélicoïdale sous la forme d'un verre, ladite phase de cristaux liquides étant composée de molécules de cristaux liquides calamatiques possédant une fraction luminescente et la composition étant telle qu'une excitation de la fraction luminescente entraîne le milieu à émettre une lumière dans la largeur de bande de réflexion sélective de la phase de cristaux liquides.

**6.** Composition suivant la revendication 4 ou 5, dans laquelle la température de transition vitreuse (Tg) des molécules de cristaux liquides calamatiques est supérieure à 50˚C.

**7.** Composition suivant l'une quelconque des revendications 1 à 3, dans laquelle les molécules de cristaux liquides calamatiques sont présentes sous la forme d'un réseau polymérisé.

**8.** Composition capable d'émettre une lumière circulairement polarisée comprenant un milieu incluant une phase de cristaux liquides chirale, hélicoïdale sous la forme d'un réseau polymérisé, ladite phase de cristaux liquides étant composée de molécules de cristaux liquides calamatiques possédant une Fraction luminescente et la composition étant telle qu'une excitation de la fraction luminescente entraîne le milieu à émettre une lumière dans la largeur de bande de réflexion sélective de la phase de cristaux liquides.

**9.** Composition suivant l'une quelconque des revendications 1 1 8, dans laquelle la fraction luminescente des molécules de cristaux liquides calamatiques est une fraction électroluminescente.

**10.** Composition suivant l'une quelconque des revendications 1 à 9, dans laquelle le spectre d'émission de la fraction est accordé à la largeur de bande de réflexion sélective de 1a. phase de cristaux liquides.

**11.** Composition suivant l'une quelconque des revendications 1 à 9, dans laquelle la composition incorpore un colorant capable d'absorber l'émission de la fraction luminescente et de ré-émettre une lumière présentant une longueur d'onde dans la largeur de bande de réflexion sélective.

**12.** Composition suivant l'une quelconque des revendications 1 à 9, dans laquelle la composition incorpore un colorant qui peut être excité par un transfert non radioactif depuis les molécules de cristaux liquides vers le colorant.

**13.** Composition suivant l'une quelconque des revendications 1 à 12, dans laquelle la fraction luminescente des molécules de cristaux liquides calamatiques est une fraction électroluminescente.

**14.** Composition suivant l'une quelconque des revendications 1 à 12, dans laquelle la fraction luminescente des molécules de cristaux liquides calamatiques est une fraction photoluminescente.

**15.** Composition suivant l'une quelconque des revendications 1 à 14, dans laquelle les molécules de cristaux liquides transportent des trous ou des électrons.

**16.** Composition suivant l'une quelconque des revendications 1 à 15, dans laquelle les molécules de cristaux liquides calamatiques incluent au moins un centre chiral.

**17.** Composition suivant la revendication 16, dans laquelle la phase de cristaux liquides comprend des molécules de cristaux liquides chirales et achirales.

**18.** Composition suivant l'une quelconque des revendications 1 à 15, dans laquelle les molécules de cristaux liquides calamatiques sont achirales et la phase de cristaux liquides inclut un dopant chiral.

**19.** Composition suivant l'une quelconque des revendications 1 à 18, dans laquelle les molécules de cristaux liquides calamatiques incorporent un coeur luminescent composé de 4 à 6 cycles aromatiques conjugués, ledit coeur étant attaché à deux groupes d'espacement aliphatiques.

**20.** Composition suivant la revendication 19, dans laquelle les groupes d'espacement aliphatiques contiennent chacun une chaîne de 4 à 16 atomes de carbone.

**21.** Composition suivant la revendication 19 ou 20, dans laquelle le coeur inclut une fraction de fluorène.

**22.** Composition suivant l'une quelconque des revendications 19 à 21, dans laquelle les molécules de cristaux liquides calamatiques sont de la formule:

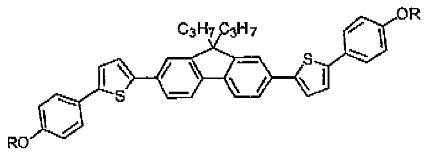

dans laquelle chaque R est identique ou différent et représente le groupe d'espacement.

**23.** Composition suivant la revendication 22, dans laquelle un des groupes R ou les deux incorporent un centre chiral.

**24.** Composition suivant la revendication 23, dans laquelle chaque groupe R est de la formule:

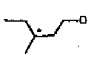

**25.** Composition suivant la revendication 23, dans laquelle chaque groupe R est de la formule:

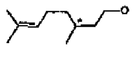

**26.** Composition suivant la revendication 23, dans laquelle chaque groupe R est de la formule:

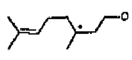

**27.** Dispositif émettant une lumière composé d'une cellule possédant une paire de faces opposées et contenant une

composition suivant l'une quelconque des revendications 1 à 26, au moins une desdites faces étant transparente à la lumière polarisée émise par ladite composition lors d'une excitation de la fraction luminescente.

**28.** Dispositif suivant la revendication 27, dans lequel l'espacement entre lesdites faces opposées est de 1 à 10 μm.

**29.** Dispositif suivant la revendication 27 ou 28, qui est capable d'être excité par une lumière polarisée et/ou non polarisée.

**30.** Dispositif suivant l'une quelconque des revendications 27 à 29, capable d'émettre une émission laser polarisée circulaire.

**31.** Dispositif suivant l'une quelconque des revendications 27 à 30, qui est un OLED.

**32.** Combinaison d'un dispositif émettant une lumière suivant l'une quelconque des revendications 27 à 31 et d'un dispositif d'affichage à cristaux liquides, ledit dispositif émettant une lumière apportant une source de lumière polarisée pour le dispositif d'affichage à cristaux liquides.

**33.** Procédé pour la production d'un dispositif émettant une lumière suivant l'une quelconque des revendications 29 à 32, de fourniture d'une cellule possédant une paire de parois opposées, dont au moins une est munie sur sa surface intérieure d'une couche d'alignement, et de remplissage de la cellule avec une formulation qui est un précurseur à la composition suivant l'une quelconque des revendications 1 à 26, qui incorpore des molécules de cristaux liquides calamatiques possédant une fraction luminescente et qui est capable d'être assemblée par ladite ou lesdites couches d'alignement en une phase de cristaux liquides chirale, hélicoïdale, d'assemblage de ladite formulation en ladite phase de cristaux liquides et d'immobilisation de ladite phase de manière à donner à cette dernière un pas hélicoïdal fixe, indépendant de la température.

**34.** Procédé suivant la revendication 33, dans lequel la ou chaque couche d'alignement est une couche de photoalignement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9707654 A1
- WO 9707654 A


### Non-patent literature cited in the description


- **VOIGT M. et al.** Circularly polarized emission from a narrow bandwidth dye doped into a chiral nematic liquid crystal. *LIQUID CRYSTALS,* May 2002, vol. 29 (5), 653-656
- **BIN LIU et al.** Application of alternating fluorene and thiophene copolymers in polymer light-emitting diodes. *SYNTHETIC METALS,* 10 July 2002, vol. 129 (2), 129-134
- **S. M. KELLY.** Flat Panel Displays: Advanced Organic Materials. *RSC,* 2000
- **C. H. CHEN ; J. SHI ; C. W. TANG.** *Macromol. Symp.,* 1997, vol. 125, 1
- **M. GRELL ; D. D. C. BRADLEY.** *Adv. Mater.,* 1999, vol. 11, 895
- **D. D. C. BRADLEY.** *Curr. Opin. Solid State Mater. Sci.,* 1996, vol. 1, 789
- **M. JANDKE ; P. STROHRIEGL ; J. GMEINER ; W. BRÜTTING ; M. SCHWOERER.** *Adv. Mater.,* 1999, vol. 11, 1518
- **M. GRELL ; W. KNOLL ; D. LUPO ; A. MEISEL ; T. MITEVA ; D. NEHER ; H. NOTHOFER ; U. SCHERF ; A. YASUDA.** *Adv. Mater.,* 1999, vol. 11, 671
- **P. DYREKLEV ; M. BERGGREN ; O. INGANÄS ; M. R. ANDERSON ; O. WENNERSTRÖM ; T. HJERTBERG.** *Adv. Mater.,* 1995, vol. 7, 43
- **U. LEMMER ; D. VACAR ; D. MOSES ; A. J. HEEGER ; T. OHNISHI ; T. NOGUCHI.** *Appl. Phys. Lett.,* 1996, vol. 68, 21
- **K. PICHLER ; R. H. FRIEND ; P. L. BURN ; A. B. HOLMES.** *Synth. Metals,* 1993, vol. 55-57, 454
- **V. CIMROVÁ ; M. REMMERS ; D. NEHER ; G. WEGNER.** *Adv. Mater.,* 1996, vol. 8, 146
- **T. W. HAGLER ; K. PAKBAZ ; K. F. VOSS ; A. J. HEEGER.** *Phys. Rev. B,* 1991, vol. 44, 8652
- **N. A. J. M. VAN AERLE ; M. BARMENTLO ; R. W. J. HOLLERING.** *J. Appl. Phys.,* 1993, vol. 74, 3111
- **R. A. M. HIKMET ; D. B. BRAUN ; A. G. J. STARING ; H. F. M. SCHOO ; J. LUB.** *Int. Pat. Appl.*
- **A. BACHER ; P. G. BENTLEY ; D. D. C. BRADLEY ; L. K. DOUGLAS ; P. A. GLARVEY ; M. GRELL ; K. S. WHITEHEAD ; M. L. TURNER.** *J. Mat. Chem.,* 1999, vol. 9, 2985
- **A. P. DAVEY ; R. G. HOWARD ; W. J. BLAU.** *J. Mater. Chem.,* 1997, vol. 7, 417
- **A. E. A. CONTORET ; S. R. FARRAR ; P. O. JACKSON ; L. MAY ; M. O'NEILL ; J. E. NICHOLLS ; S. M. KELLY ; G. J. RICHARDS.** *Adv. Mater.,* 2000, vol. 12, 971
- **S. R. FARRAR ; A. E. A. CONTORET ; M. O'NEILL ; G. J. RICHARDS ; S. M. KELLY.** *Phys. Rev B.*
- **A. E. A. CONTORET ; S. R. FARRAR ; M. O'NEILL ; J. E. NICHOLLS ; G. J. RICHARDS ; S. M. KELLY ; A. W. HALL.** *Chem. Mater.*
- **H. SHI ; B. M. CONGER ; D. KATSIS ; S. H. CHEN.** *Liq. Cryst.,* 1998, vol. 24, 163
- **E. PEETERS ; M. P. T. CRISTIAANS ; R. A. J. JANNSEN ; H. F. M. SCHOO ; H. P. J. M. DEKKERS ; E. W. MEIJER.** *J. Am./ Chem. Soc.,* 1997, vol. 119, 9909
- **M. ODA ; H.-G. NOTHOFER ; G. LIESER ; U. SCHERF ; S. C. J. MESKERS ; D. NEHER.** *Adv. Mater.,* 2000, vol. 12, 362
- **S. H. CHEN ; D. KATSIS ; A. W. SCHMID ; J. C. MASTRANGELO ; T. TSUTSUI ; T. N. BLANTON.** *Nature,* 1999, vol. 397, 385
- **C. P. LIN ; T. TSUTSUI ; S. SAITO ; S. H. CHEN ; J. C. MASTRANGELO ; H. SHI.** *Mat. Res. Soc. Symp. Proc.,* 1996, vol. 425, 233
- **T. TSUTSUI ; C. P. LIN ; S. SAITO ; S. H. CHEN ; H. SHI ; J. C. MASTRANGELO.** *Mat. Res. Soc. Symp. Proc.,* 1996, vol. 425, 225